# FASCICULE DE BREVET EUROPEEN

(11) **EP 3 135 017 B1**
(45) Date de publication et mention de la délivrance du brevet: **01.04.2020**
(21) Numéro de dépôt: 15720031.2
(22) Date de dépôt: 23.04.2015
(51) Int. Cl.: H04L 29/08, H04W 4/00, H04W 4/12, H04W 4/70

(54) **PROCÉDÉS D'ÉCHANGE DE DONNÉES AVEC UN ÉQUIPEMENT COMPRENANT DES MOYENS DE COMMUNICATION RADIO**
VERFAHREN ZUM AUSTAUSCH VON DATEN MIT EINER VORRICHTUNG MIT EINEM FUNKKOMMUNIKATIONSMITTEL
METHODS OF EXCHANGING DATA WITH A DEVICE COMPRISING RADIO COMMUNICATION MEANS

(30) Priorité: 23.04.2014 FR 1453651
(43) Date de publication de la demande: 01.03.2017
(73) Titulaire: Bouygues Telecom, 75116 Paris (FR)
(72) Inventeur: JANICAUD, Nicolas, F-92170 Vanves (FR)
(74) Mandataire: Regimbeau
(86) Numéro de dépôt international: PCT/EP2015/058846
(87) Numéro de publication internationale: WO 2015/162225

(56) Documents cités:
- EP-A1- 2 360 871
- US-A1- 2012 109 663

## Description

### DOMAINE TECHNIQUE GENERAL

La présente invention concerne le domaine des objets communicants.

Plus précisément, elle concerne des procédés de traitement d'un paquet de données émis depuis un équipement comprenant des moyens de communication radio, ou d'une requête émise par un serveur client à destination de cet équipement.

### ETAT DE L'ART

Le M2M (« Machine to Machine ») est une branche en pleine expansion des télécoms visant à permettre l'interaction autonome entre « objets communicants », c'est-à-dire dispositifs (tels que des compteurs électriques, des containeurs de fluide, des périphériques domotiques, etc.) équipés de moyens de communication réseau et interagissant sans intervention humaine.

Cette technologie fonctionne en utilisant des réseaux de communication mobile tels que le réseau GSM et ses dérivés (GPRS, UMTS, LTE, etc.).

Les dernières normes telles que le LTE mettent l'accent sur le débit (jusqu'à 300Mbits/s), en vue d'une utilisation sur les smartphones. Or on constate que la grande majorité des applications M2M n'ont en réalité besoin que d'un débit de quelques milliers de bits par jour. La plupart des communications entre objets consistent en effet seulement en un envoi occasionnel de leur état ou de leur position. De surcroît, les protocoles tels que LTE entraînent une forte consommation électrique, alors qu'il est essentiel de minimiser les consommations énergétiques des objets communicants pour qu'ils puissent avoir une autonomie compatible avec une utilisation autonome. Il est à noter qu'une version M2M du LTE, appelée LTE-M, est envisagée, mais elle n'est qu'à l'état d'ébauche de spécification. Pour ces raisons, les réseaux mobiles existants ne sont pas les plus adaptés pour le M2M.

Par conséquent, d'autres protocoles de communication ont émergé, pour la plupart basés sur une technologie radio autour de la bande 868 MHz. On peut citer LoRa™, ou UNB Sigfox™.

Il s'agit de protocoles très bas débit (jusqu'à 1kbit/s), longue portée (plusieurs kilomètres), et très basse consommation. A titre d'exemple, les moyens de communication réseau nécessaires pour un objet communicant peuvent fonctionner plusieurs années avec une pile bouton.

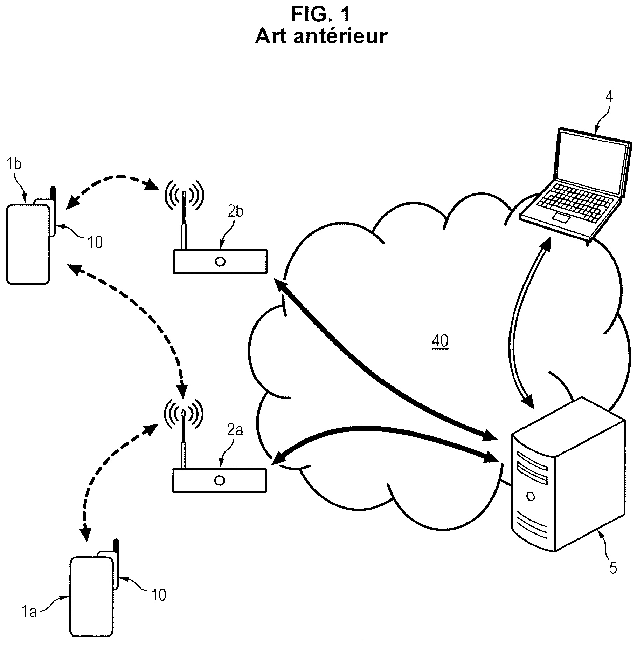

Aujourd'hui, l'architecture d'un réseau utilisant ces technologies radio est conforme à celle représentée à la **figure 1**. Les objets communicants 1a, 1b sont connectés via ondes radio à des passerelles 2a, 2b (équipées d'une antenne radio et de moyens de traitement de données) qui font l'interface entre le réseau sans fil radio et un réseau étendu classique 40 (un WAN (« Wide Access Network »), en particulier le réseau internet). Ce dernier relie les passerelles 2a, 2b à un ou plusieurs serveurs de l'opérateur 5 permettant le traitement des paquets reçus/émis par les objets communicants 1a, 1b. Les passerelles 2a, 2b sont capables d'interagir chacune avec plusieurs milliers d'objets 1a, 1b, et une poignée de passerelles 2a, 2b suffit ainsi à couvrir une ville de taille moyenne.

Dans le cas de la réception, ce traitement mis en œuvre par le serveur 5 comprend une phase de « pré-traitement » (avant exploitation effective des données contenues dans les paquets) qui s'avère beaucoup plus lourde que dans des réseaux de type GSM. En effet, de sorte à économiser au maximum l'énergie, le paquet est minimaliste.

Le pré-traitement comprend ainsi notamment une vérification d'intégrité, l'élimination des doublons (un objet communicant envoie généralement plusieurs fois ses paquets, et de surcroit ceux-ci peuvent être reçus par plusieurs passerelles 2a, 2b), l'élimination des paquets d'objets « inconnus » (par exemple ceux d'un autre opérateur) et le formatage des paquets (extraction des données). A ce stade, les données peuvent être post-traitées, par exemple en mettant à jour une base de données d'état, en déclenchant l'envoi d'autres messages, etc. Des serveurs applicatifs/clients 4 peuvent être également connectés au serveur 5. Les paquets à destination des objets 1a, 1b sont également générés par le serveur 5 au travers de mécanismes dédiés. De surcroit, la mise en œuvre de communications par les équipements 1a, 1b est soumise à une facturation, également gérée par le serveur 5 à chaque émission ou réception d'un paquet.

Cette architecture, décrite par exemple dans le document WO 2011/157938, apporte satisfaction, mais la hausse du nombre d'objets communicants fait qu'une difficulté est en train d'apparaitre. En effet, pour consommer le minimum les moyens de communication radio 10 des objets communicants 1a, 1b sont prévus pour être éteints l'essentiel du temps, et n'être allumés qu'à certains intervalles réguliers de quelques microsecondes (au maximum 1s). En conséquence, ces périodes concentrent l'essentiel du trafic, d'où des pics gigantesques de flux de données que les serveurs 5 n'arrivent plus à gérer. Or, le nombre d'objets communicants est en train d'exploser.

Les documents EP 2 360 871 A1 (ACCENTURE GLOBAL SERVICES LTD [IE]) 24 août 2011 (2011-08-24) et US 2012/109663 A1 (FLOYD GREGORY RAY [US] ET AL) 3 mai 2012 (2012-05-03) font également partie de l'état de l'art pertinent.

Il serait par conséquent souhaitable de disposer d'un nouveau paradigme de traitement des paquets dans un réseau M2M qui garde tous les avantages existants en termes de portée, faible consommation d'énergie, fiabilité, faible coût, etc., mais qui s'affranchisse des limitations existantes et soit capable de gérer des millions d'objets connectés sans difficulté.

### PRESENTATION DE L'INVENTION

L'invention est définie par les revendications indépendantes 1 (procédé), 10 (plateforme), 13 (programme) et 14 (moyen de stockage).

La présente invention se rapporte ainsi selon un premier aspect à un procédé de traitement d'un paquet émis depuis un équipement comprenant des moyens de communication radio, le procédé étant caractérisé en ce qu'il comprend des étapes de :
(a) Réception du paquet par au moins une passerelle via communication radio, chaque passerelle étant connectée au réseau internet via un Bus d'Entreprise (ESB) mis en œuvre par au moins une plateforme ;
(b) Vérification de l'intégrité du paquet et retransmission des données du paquet à un connecteur d'entrée de l'ESB ;
(c) Réception desdites données du paquet par le connecteur d'entrée et conversion desdites données du paquet en un message interne à l'ESB contenant les données du paquet ;
(d) Détermination d'un identifiant d'état et d'un identifiant client de l'équipement d'origine du paquet par interrogation d'un annuaire d'équipements associés à l'ESB,
(e) Modification par l'ESB dudit message interne de sorte à intégrer lesdits identifiant d'état et identifiant client déterminés, et émission du message modifié à destination d'une file d'attente de messages ;
(f) Dépilement dudit message de ladite pile de message, et modification par l'ESB d'une base de données en fonction des données et des identifiants contenus dans le message.

Selon d'autres caractéristiques avantageuses et non limitatives :
- l'étape (f) comprend, préalablement à la modification de la base de données, la transmission de l'identifiant client contenu dans le message à un serveur de facturation ;
- l'étape (c) comprend l'intégration au message interne d'un identifiant unique du message par le connecteur d'entrée ;
- l'identifiant unique du message interne comprend un identifiant de l'équipement d'origine du paquet et un compteur de trames ;
- le procédé comprend préalablement à l'étape (d) une étape (c1) de mise en œuvre par l'ESB d'un filtrage idempotent en fonction des identifiants uniques de sorte à supprimer tout message doublon ;
- chaque passerelle est connectée au connecteur via un client configuré pour ouvrir un tunnel entre le client et le connecteur ;
- le client est configuré pour transmettre les données du paquet au connecteur via le protocole MQ Telemetry Transport (MQTT) ;
- l'étape (c) comprend une première interrogation de l'annuaire pour déterminer si l'équipement d'origine du paquet est présent dans l'annuaire ; et, si l'équipement est déterminé présent, une deuxième interrogation de l'annuaire pour déterminer l'identifiant d'état et l'identifiant client l'équipement ;
- l'état d'un équipement est choisi parmi « actif », « interdit », « provisionné » et « inconnu » ;
- l'étape (e) est mise en œuvre seulement si l'équipement est déterminé comme présentant un état actif.

Selon un deuxième aspect, l'invention concerne un procédé de traitement d'une requête émise par un serveur client à destination d'un équipement comprenant des moyens de communication radio adaptés pour communiquer avec au moins une passerelle, le procédé étant caractérisé en ce qu'il comprend des étapes de :
(a) Réception de la requête par un Bus d'Entreprise (ESB) mis en œuvre par au moins une plateforme, le serveur client étant relié à ladite passerelle via l'ESB ;
(b) Envoi à un connecteur de sortie de l'ESB d'un message interne à l'ESB contenant les données de ladite requête ;
(c) Emission par le connecteur de sortie à destination de la passerelle des données de ladite requête ;
(d) Diffusion d'un paquet contenant les données de la requête via communication radio par la passerelle.

Selon d'autres caractéristiques avantageuses et non limitatives :
- chaque passerelle est connectée au connecteur de sortie via un client configuré pour ouvrir un tunnel entre le client et le connecteur ;
- le client est configuré pour transmettre les données de la requête à la passerelle via le protocole Extensible Messaging and Presence Protocol (XMPP).

Selon un troisième aspect, l'invention concerne une plateforme pour la mise en œuvre d'un Bus d'Entreprise (ESB), comprenant des moyens de traitement configurés pour :
- Recevoir à un connecteur d'entrée de l'ESB, depuis une passerelle, des données d'un paquet, et convertir lesdites données du paquet en un message interne à l'ESB contenant les données du paquet ;
- Déterminer un identifiant d'état et d'un identifiant client d'un équipement d'origine du paquet par interrogation d'un annuaire d'équipements associés à l'ESB ;
- Modifier ledit message interne de sorte à intégrer lesdits identifiant d'état et identifiant client déterminés, et émettre le message modifié à destination d'une file d'attente de messages ;
- Dépiler ledit message de ladite pile de message, et modifier une base de données en fonction des données et des identifiants contenus dans le message.

Selon d'autres caractéristiques avantageuses et non limitatives :
- les moyens de traitement sont en outre configurés pour :
   - Recevoir une requête depuis un serveur client ;
   - Envoyer à un connecteur de sortie de l'ESB un message interne à l'ESB contenant les données de ladite requête ;
   - Générer au niveau du connecteur de sortie des données de ladite requête à destination d'une passerelle, en vue d'une diffusion d'un paquet contenant les données de la requête via communication radio par la passerelle ;

Selon un quatrième aspect, l'invention concerne un système de gestion d'équipements, le système comprenant au moins une plateforme pour la mise en œuvre d'un Bus d'Entreprise (ESB) selon le troisième aspect, et au moins une passerelle adaptée pour communiquer avec les équipements via communication radio, et connectée à l'ESB.

Selon un cinquième et un sixième aspect, l'invention concerne un produit programme d'ordinateur comprenant des instructions de code pour l'exécution d'un procédé selon le premier aspect de l'invention de traitement d'un paquet émis depuis un équipement comprenant des moyens de communication radio, ou un procédé selon le deuxième aspect de l'invention de traitement d'une requête émise par un serveur client à destination d'un équipement comprenant des moyens de communication radio adaptés pour communiquer avec au moins une passerelle ; et un moyen de stockage lisible par un équipement informatique sur lequel un produit programme d'ordinateur comprend des instructions de code pour l'exécution d'un procédé selon le premier aspect de l'invention de traitement d'un paquet émis depuis un équipement comprenant des moyens de communication radio, ou un procédé selon le deuxième aspect de l'invention de traitement d'une requête émise par un serveur client à destination d'un équipement comprenant des moyens de communication radio adaptés pour communiquer avec au moins une passerelle.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
- la figure 1 précédemment décrite est un schéma d'une architecture connue de réseau ;
- la figure 2 est un schéma d'une architecture de réseau pour la mise en œuvre des procédés selon l'invention ;
- les figures 3a-3c représentent schématiquement trois classes d'objets connectés ;
- les figures 4a-4b représentent schématiquement des interfaces entre des passerelles et un ESB ;
- la figure 5a est un schéma d'un ESB pour la mise en œuvre du procédé de traitement d'un paquet selon l'invention ;
- la figure 5b est un exemple d'une page d'un annuaire LDAP ;
- les figures 6a-6b représentent schématiquement des interfaces entre l'ESB et le réseau internet.

### DESCRIPTION DETAILLEE

### Architecture

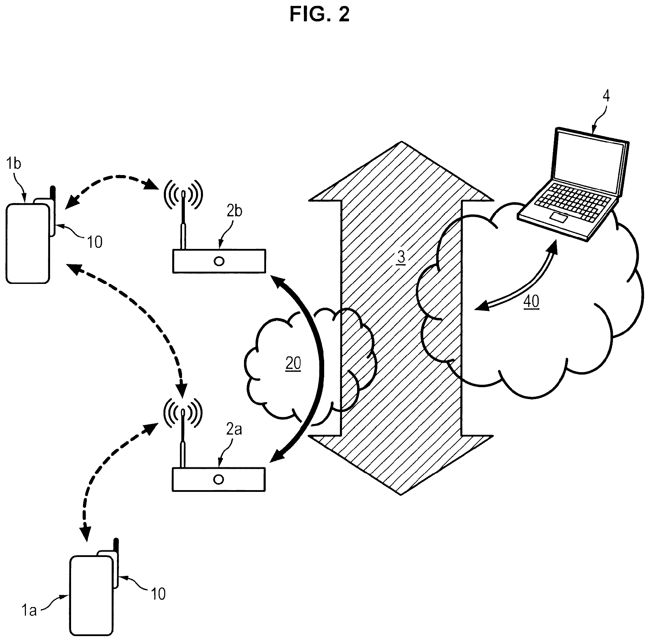

En référence aux dessins et en particulier à la **figure 2****,** l'invention concerne des procédés d'échange de données avec un ou plusieurs objets communicant, dont un procédé de traitement d'un paquet émis depuis un équipement 1a, 1b comprenant des moyens de communication radio 10 (sens montant: équipements 1a, 1b vers clients 4), et un procédé de traitement d'une requête émise par un serveur client 4 à destination d'un équipement 1a, 1b comprenant des moyens de communication radio 10 adaptés pour communiquer avec au moins une passerelle 2a, 2b (sens descendant : clients 4 vers équipements 1a, 1b).

Les procédés selon l'invention sont basés sur une architecture comprenant une plateforme mettant en œuvre un Bus d'Entreprise 3 (ESB, « Entreprise Service Bus », voir paragraphe suivant), qui fait l'interface entre les passerelles 2a, 2b et les autres acteurs (réseau WAN 40 du type internet). Comme l'on verra, le réseau internet 40 (et/ou un réseau privé 20) comprend des serveurs de tiers (clients) 4, et des serveurs de l'opérateur réseau (en particulier serveur de facturation 34 et base de données 35). Les clients sont les possesseurs des équipements 1a, 1b qui souhaitent bénéficier des données associées. Par exemple, si des équipements sont des compteurs intelligents, le client peut être un fournisseur d'électricité qui souhaite pouvoir surveiller les consommations et réaliser des traitements statistiques sur les données remontées.

De façon similaire à l'art antérieur, les équipements 1a, 1b (qui peuvent être n'importe quels objets communicants équipés de moyens de communication radio 10, en particulier des moyens de communication « bas débit » (débit moyen inférieur à 40 kbits/s, avantageusement inférieur à 1 kbit/s, voir inférieur à 10 bits/s) et « longue portée » (plusieurs kilomètres), en particulier, conformes à la norme IEEE 802.15.4).

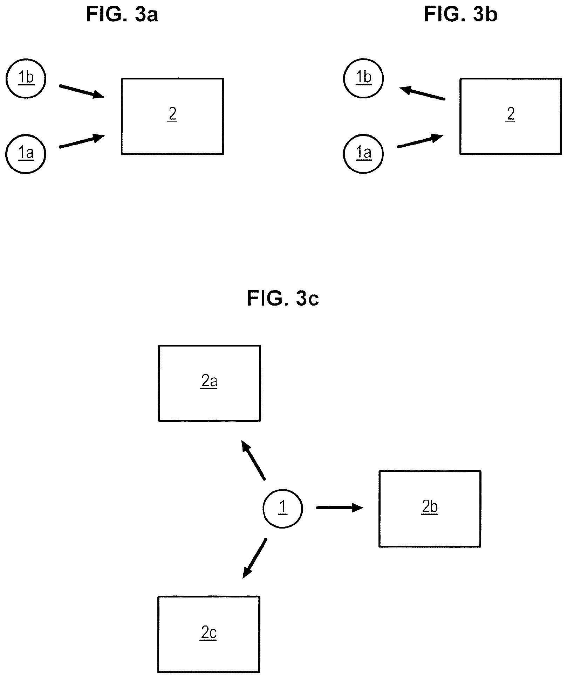

En référence aux figures 3a-c, trois « classes » d'équipements 1a, 1b sont connues :
- les équipements de classe 1 (**figure 3a**) ne font que remonter de la donnée (ils émettent des paquets) ;
- les équipements de classe 2 (**figure 3b**) sont également capable de recevoir des paquets (communication bidirectionnelle) ;
- les équipements de classe 3 (**figure 3c**) sont capables de mettre en œuvre de la géolocalisation en communiquant avec plusieurs passerelles 2a, 2b.

Les passerelles 2a, 2b sont des « gateways » connues comprenant typiquement une antenne, des moyens de traitement de données, et le plus souvent des moyens de communication réseau (par exemple une carte Ethernet) et des moyens de mesure ultraprécise de l'heure (pour connaître les intervalles temporels d'activation des équipements 1a, 1b et l'horodatage des paquets en vue de la géolocalisation dans le cas d'équipements de classe 3). Il est à noter que les passerelles 2a, 2b peuvent être simplement connectées à d'autres passerelles via ondes radio (et donc ne posséder aucune connexion filaire). Le présent système est spécifique en ce que les passerelles 2a, 2b ne sont pas reliées directement au réseau internet 40. Au contraire elles forment avantageusement un réseau opérateur privé 20. Ce réseau privé 20 peut être un réseau virtuel de type VLAN (« Virtual Local Access Network »).

Il est à noter qu'un ou plusieurs serveurs client 4 évoqués précédemment (en particulier des serveurs de l'opérateur) peuvent être disposés dans le réseau privé 20 et non dans le réseau internet 40. Par exemple, dans le cas où le serveur 4 serait hébergé par le service « Cloud » de l'opérateur, il peut être connecté via par un pont entre le VLAN du Cloud et le réseau privé 20. Les serveurs 34 et 35 (qui sont des serveurs de l'opérateur) décrits plus loin peuvent éventuellement être également disposés dans le réseau privé 20. Dans la suite de la présente description, on prendra l'exemple de serveurs 4 disposés dans le réseau internet, mais l'homme du métier saura transposer l'invention dans le cas contraire.

La plateforme (on comprendra qu'il peut y en avoir plus d'une) est notamment un serveur de l'opérateur du réseau radio (ou d'un partenaire), disposant de moyens de traitement de données pour la mise en œuvre de l'ESB 3. Cette plateforme est avantageusement disposée au sein du réseau opérateur 20, et fonctionne alors comme un « proxy » (serveur passerelle en français) entre le réseau opérateur privé 20 et le réseau internet 40.

Comme l'on verra, le réseau internet 40 comprend en particulier une base de données 35 associée aux équipements 1a, 1b (dans laquelle sont stockées les données relatives aux équipements, telles que leur position, etc.), accessible à des clients 4, et avantageusement un serveur de facturation 34 pour la facturation des communications liées aux équipements 1a, 1b. Comme mentionné avant, les serveurs 34 et 35 peuvent également être disposés dans le réseau privé 20.

### ESB & Connecteurs

Un Bus d'Entreprise est une architecture informatique intergicielle (« middleware » en terminologie anglo-saxonne) conçue pour permettre la communication entre des applications qui ne sont pas conçues pour fonctionner ensemble. Pour cela, l'ESB rajoute une couche d'abstraction (par exemple XML, « eXtensible Markup Language », ou JSON, « JavaScript Object Notation ». On peut par exemple également citer le langage YAML, « YAML Ain't Markup Language ». De façon générale les langages de balisage, facilement lisibles à la fois par l'homme et la machine, conviennent) en utilisant des messages internes comme intermédiaire d'une application à une autre. Les instructions reçues ou envoyées sont traduites vers ou depuis le langage de ces messages.

Les architectures ESB sont particulièrement robustes. En effet, il est courant de les mettre en œuvre par une pluralité de plateformes qui sont complémentaires, mais assurent toutes les mêmes opérations. Le fait qu'une plateforme tombe en panne n'empêche donc pas le système complet de fonctionner, il sera seulement un peu ralenti. On citera à titre d'exemple l'ESB « Mule ESB » de MuleSoft basé sur Java.

Les « traductions », qui constituent l'essentiel des opérations de l'ESB, sont avantageusement réalisées par des modules dédiés de l'ESB appelés connecteurs qui assurent la conversion de données reçues par l'ESB en messages internes à l'ESB et/ou la conversion de messages internes à l'ESB en données émises par l'ESB.

Un connecteur est un composant dont une partie ou la totalité de l'exécution a lieu sur la plateforme de l'ESB 3. Il peut être autonome ou se baser sur un connecteur plus générique de la plateforme et s'exécuter dans son propre contexte. En se basant sur le modèle des connecteurs ESB, il permet d'adapter les briques extérieures comme les passerelles 2a, 2b en y incorporant la logique spécifique de la brique extérieure, et la traduisant en concept abstrait propre à la logique de la plateforme.

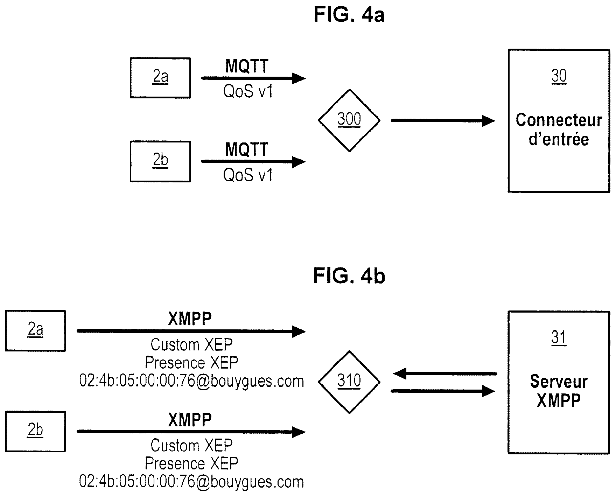

En particulier, trois types de connecteurs 30, 31 et 33 de l'ESB 3 sont représentés (voir les figures 4a à 6b). Une configuration préférée de ces connecteurs va à présent être décrite, mais on comprendra que l'invention n'est limitée à aucune architecture en particulier.

Ici, les connecteurs peuvent être des connecteurs « à sens unique » ou « à double sens ». Il est à noter que tout connecteur à sens unique peut être à double sens, mais qu'ici le sens « retour » n'est pas exploité (si par exemple les équipements 1a, 1b ne font qu'envoyer des paquets et pas en recevoir).

On va dans un premier temps décrire le procédé selon le premier aspect, i.e. le traitement d'un paquet émis depuis un équipement 1a, 1b (seul sens utilisé pour les équipements de classe 1 ou 3). Pour reprendre l'exemple évoqué précédemment, un compteur intelligent peut émettre un paquet contenant une valeur de consommation électrique à une heure donnée.

### Réception de paquets

Dans une première étape (a), le paquet est classiquement reçu par au moins une passerelle 2a, 2b via communication radio.

Le présent procédé propose de déporter une partie du pré-traitement sur les passerelles 2a-2b, c'est pourquoi dans une étape (b) la passerelle vérifie l'intégrité du paquet. Ce peut être fait par un contrôle de redondance cyclique en couche 1 OSI, et/ou un hash cryptographique en couche 2 OSI.

Par ailleurs, la passerelle 2a, 2b peut mapper l'objet, c'est-à-dire identifier l'équipement 1a, 1b expéditeur (son adresse MAC est généralement dans le paquet). Un identifiant de l'équipement 1a, 1b peut être associé au paquet par la passerelle 2a, 2b, et un premier tri des doublons peut être fait à ce niveau.

Les passerelles 2a, 2b peuvent par ailleurs gérer des listes noires d'équipements 1a, 1b dont les paquets doivent être rejetés (équipements connus pour être ceux d'un autre opérateur par exemple).

Dans le cas d'un objet de classe 3, la passerelle horodate le moment d'arrivée du paquet (avantageusement à 5 ns près) pour réaliser la synchronisation GPS (« Global-Positionning System ») pour la géolocalisation de l'équipement 1a, 1b. Il est à noter qu'alternativement les passerelles 2a, 2b sont reliées à un serveur de temps fournissant une horloge ultra précise (horloge atomique).

En référence à la **figure 4a****,** la passerelle met alors en œuvre une retransmission des données du paquet à un connecteur d'entrée 30 de l'ESB 3, comme évoqué précédemment. De façon préférée, chaque passerelle 2a, 2b est connectée au connecteur d'entrée 30 via un client 300 configuré pour ouvrir un tunnel entre le client 300 et le connecteur 30. De façon préférée, c'est un client d'un protocole de messagerie instantanée tel que MQTT (« MQ Telemetry Transport »), par exemple Paho de Eclipse, et les données des messages sont transmises sous forme de messages MQTT. On notera que les données peuvent alternativement être envoyées au connecteur en utilisant d'autres protocoles, dont le protocole HTTP (« HyperText Transfer Protocol »), éventuellement sécurisé (HTTPS), en particulier conformément à une technologie de type REST (« REpresentational State Transfer »).

Pour reprendre l'exemple préféré de MQTT, le tunnel est de façon préférée en QoS (qualité de service) de niveau 1, c'est-à-dire qu'il est garanti que chaque message MQTT est transmis au moins une fois (mais éventuellement plus). Comme représenté, le connecteur d'entrée 30 est un « message broker », c'est-à-dire un « agent de messages ». Il est capable de stocker une file de messages et de les dépiler au fur et à mesure de la disponibilité des ressources de l'ESB 3. Ainsi, un fort pic de paquets augmentera localement le nombre de messages en file d'attente, mais n'altérera en rien les performances du système global. L'utilisation de l'ESB garantit que tous les paquets seront traités et qu'aucun ne sera laissé de côté.

Le connecteur 30 reçoit les données, et les traduit en un message interne de l'ESB 3. Dans le cas d'un ESB Mule, ce message est un « Mule Message » au format XML ou JSON (voir précédemment) qui suit le standard JMS (« Java Message Service »). Un message est constitué de deux parties : un en-tête (le « header ») et une charge utile (le « payload », ou « body »). Les données du paquet sont contenues dans le payload.

Le connecteur d'entrée 30 peut en outre ajouter des propriétés à l'en-tête du message interne en vue d'un traitement ultérieur plus facile (notamment une identifiant de la passerelle 2a, 2b d'origine, un identifiant unique du message, un identifiant de l'équipement 1a, 1b, etc.). Un identifiant d'un équipement 1a, 1b peut prendre la forme de son adresse MAC. L'identifiant unique d'un message peut quant à lui comprendre (sous forme d'une concaténation de chaînes de caractères) cet identifiant de l'équipement 1a, 1b d'origine du paquet et un compteur de trames (numéro de séquence de la transmission).

Par exemple, à partir d'un équipement d'adresse MAC 0xE81E770C et un compteur de trame à 100, l'identifiant unique du message associé au paquet suivant est E81E770C101. De façon préférée cet identifiant unique est le seul identifiant que le connecteur 30 insère dans le message.

A ce stade, le message ainsi formé « circule » à l'intérieur de l'ESB 3, c'est-à-dire transite d'un point de l'ESB (le producteur) à un autre (le consommateur) en suivant en particulier le standard JMS (« Java Message Service ») : JMS permet d'envoyer et de recevoir des messages de manière asynchrone entre applications ou composants Java. Le message interne émis par un connecteur est donc mis en file d'attente au niveau du connecteur suivant, le temps qu'il soit traité et converti en un message sortant.

Avant la suite de traitement, l'ESB 3 peut, dans une étape préférée (c1), mettre en œuvre un filtrage idempotent de sorte à éliminer avec certitude les doublons de paquets qui pourraient subsister. L'intérêt de l'ESB 3 est ainsi encore renforcé.

A supposer qu'un même paquet ait été reçu par plusieurs passerelles 2a, 2b, il est envoyé quasiment simultanément aux connecteurs 30, et se voit attribuer un même identifiant unique (même équipement 1a, 1b d'origine, et même trame puisque le paquet et ses doublons ont été envoyés de façon synchrone depuis l'équipement 1a, 1b). Le filtre idempotent vérifie dans une base des filtres de l'ESB 3 que l'identifiant unique n'existe pas et laisse passer le premier exemplaire message. En revanche, pour les doublons, l'identifiant est le même et le filtre ne laisse pas passer les messages. De tels filtres sont connus, en particulier sur Mule ESB.

Au pire, le temps de propagation d'une onde est de 50ms entre les passerelles 2a, 2b, et la différence entre deux transmissions réseau sur un même réseau est 150ms. De plus, le temps de traitement par une passerelle 2a, 2b ne peut varier de plus de 500ms d'une passerelle à l'autre. Ainsi l'écart maximal temporel entre deux paquets est bien inférieur à 1,2 secondes. Il suffit ainsi que le filtre idempotent garde les identifiants uniques pendant une durée D par exemple de 2 secondes.

Le filtre idempotent enregistre pour l'instant dans une mémoire (RAM) de la plateforme de l'ESB 3 cette base de donnée clé-valeur, mais en fonction de la taille nécessaire, il est possible de coupler le filtre à une base plus scalable de type Redis par exemple. Néanmoins, on peut imaginer que le nombre de transmission toutes les deux secondes est inférieur à mille pour un réseau d'un million d'équipements 1a, 1b.

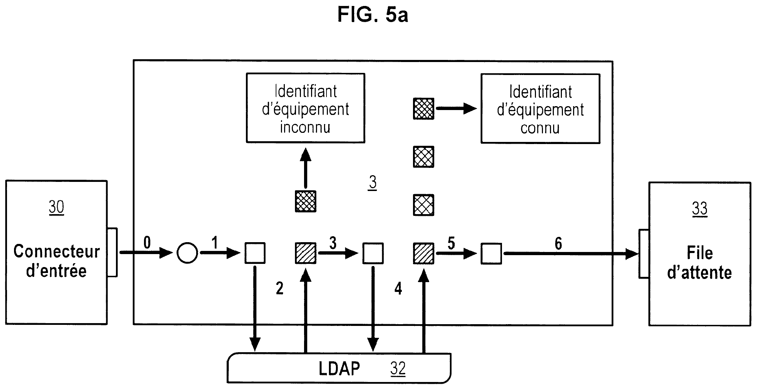

Dans une étape (c), représentée par la **figure 5a****,** l'ESB détermine un identifiant d'état et un identifiant client de l'équipement 1a, 1b d'origine du paquet par interrogation d'un annuaire 32 d'équipements 1a, 1b associés à l'ESB 3. L'annuaire est avantageusement un annuaire LDAP (Lightweight Directory Access Protocol), il liste tous les équipements 1a, 1b pour lesquels l'opérateur des passerelles 2a, 2b (et de l'ESB 3) est en charge des communications. Il peut être mis en œuvre au sein de l'ESB 3, ou sur un serveur séparé (par exemple disposé dans le réseau internet 40), et alors l'ESB interagit avec ce dernier via un connecteur qui génère les requêtes d'interrogation et traduit les réponses.

Cette étape contient plus précisément deux interrogations :
- une première interrogation de l'annuaire 32 pour déterminer si l'équipement 1a, 1b d'origine du paquet est présent dans l'annuaire 32 ; et,
- si l'équipement 1a, 1b est déterminé présent (en d'autres termes que l'opérateur le gère bien), une deuxième interrogation de l'annuaire 32 pour déterminer l'identifiant d'état et l'identifiant client de l'équipement 1a, 1b.

Cette interrogation se fait par exemple grâce à l'identifiant de l'équipement 1a, 1b (« serial number » sur la figure, i.e. l'adresse MAC) éventuellement inclus dans l'identifiant unique du message (voire directement inclus en tant que tel dans les en-têtes du message). Si l'équipement 1a, 1b est absent de l'annuaire, alors le message n'est pas traité.

Si il est déterminé présent, l'ESB 3 peut, avant de mettre en œuvre la deuxième interrogation, modifier le message interne de sorte à intégrer au message (plus précisément dans les en-têtes) cette présence.

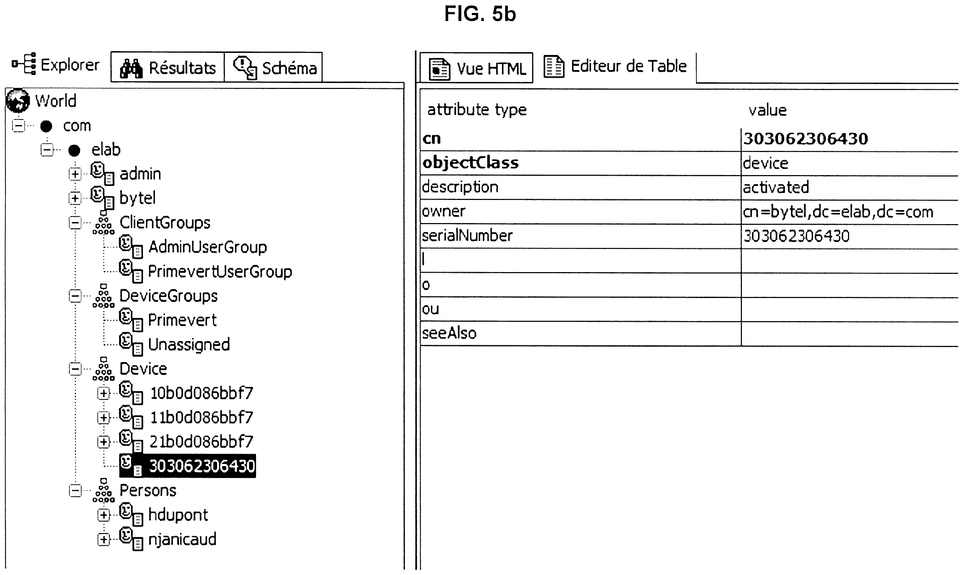

Dans la deuxième interrogation, l'ESB 3 requiert deux champs de l'annuaire 32 associés à l'équipement : un identifiant d'état et un identifiant client. L'identifiant client est l'identifiant du propriétaire de l'équipement 1a, 1b. L'identifiant d'état peut par exemple être choisi parmi quatre valeurs représentatives de quatre états : « actif », « interdit », « provisionné » (en d'autres termes pas encore actif) et « inconnu » (si le champ est manquant). La **figure 5b** représente un exemple d'une page de l'annuaire 32. Un équipement 1a, 1b est décrit, il possède l'état activé (champ « description ») et son identifiant client est donné par le champ « owner ». L'annuaire 32 est contrôlé par l'opérateur du réseau 20 qui le modifie en fonction des abonnements souscrits par les clients (possesseurs d'équipements 1a, 1b).

Dans une étape (d), comme il avait été décrit pour la présence, l'ESB 3 modifie le message interne (à nouveau en particulier les en-têtes) de sorte à intégrer lesdits identifiant d'état et identifiant client déterminés.

Le message modifié est alors émis à destination d'une file d'attente de messages 33. De façon particulière, la file d'attente 33 est un connecteur similaire au connecteur d'entrée 30 (voire est confondu avec lui). Les messages présents dans la file d'attente sont alors prêts à être effectivement traités.

Il peut être prévu que cette étape n'est mise en œuvre que si l'équipement 1a, 1b présente un état particulier, par exemple « actif », et que sinon le message n'est pas traité. Alternativement ou en complément :
- si l'état est « interdit », une alerte est émise par l'ESB 3 à destination de l'opérateur du réseau 20 ;
- si l'état est « inconnu », une requête de référencement d'un nouvel équipement 1a, 1b est émise par l'ESB 3 à destination de l'annuaire 32 ;
- si l'état est « provisionné », l'état est basculé à « activé » dans l'annuaire 32, et une facturation spécifique est mise en œuvre (voir plus loin).

Dans une étape (f), ladite pile de message 33 est dépilée (les messages peuvent être ainsi mis en attente le temps que les ressources de l'ESB 3 soient disponibles), de la même façon que ce qui se fait pour le connecteur d'entrée 30, pour traitement par l'ESB 3.

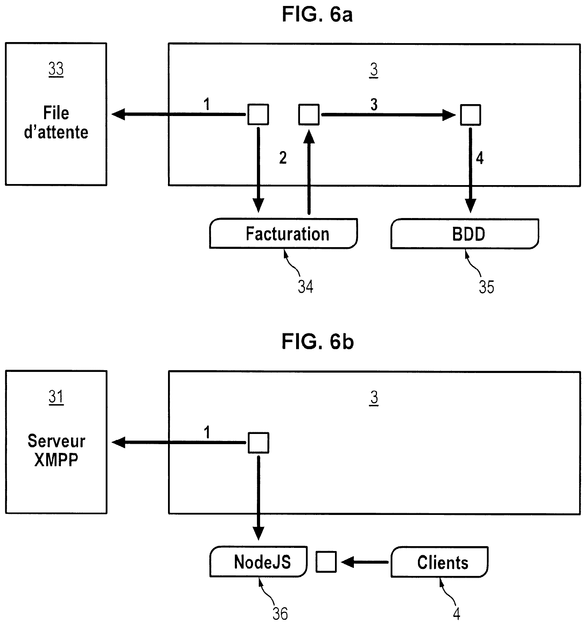

En référence à la **figure 6a****,** l'identifiant client est extrait du message, et transmis à un serveur de facturation 34 (en particulier un serveur du réseau internet 40 ou du réseau privé 20), de sorte à ce que l'émission du message par l'équipement 1a, 1b soit décomptée et facturée au client qui possède l'équipement 1a, 1b (le fournisseur d'électricité dans notre exemple). L'identifiant d'état peut également être transmis au serveur de facturation 34, car un changement d'état (par exemple activation d'un équipement provisionné) peut être facturé spécifiquement.

Une fois l'enregistrement de cet identifiant client confirmé par le serveur de facturation 34, le traitement du contenu du paquet à proprement parler est réalisé. En conséquence, l'ESB 3 modifie une base de données 35 (par exemple une base MongoDB) du réseau internet 40 (ou du réseau privé 20) en fonction des données et des identifiants contenus dans le message. Par exemple, si la donnée est une valeur de consommation électrique au niveau d'un compteur, cette valeur est renseignée, éventuellement associée à une heure et à la position du compteur, dans la base de données 35. Alternativement, si la donnée est une position GPS, la géolocalisation de l'équipement 1a, 1b est renseignée pour le client en fonction des données d'en-tête du message.

Comme expliqué précédemment, cela prend la forme d'une requête émise à destination de la base de données 35 par un connecteur adapté.

### Emission de paquets

L'ESB 3 est adapté pour gérer le sens inverse de circulation de données, en d'autres termes pour traiter une requête émise par un serveur client 4 (par exemple du réseau internet 40), à destination d'un équipement 1a, 1b (de classe 2). Par exemple, notre fournisseur d'électricité peut émettre à destination d'un compteur intelligent une requête de changement de tarif (heures creuses/heures pleines) suite à un pic de consommation.

Le traitement de cette requête aboutit à la génération d'un paquet, diffusé (en broadcast) par les passerelles 2a, 2b. Le serveur client 4 est en effet relié à au moins une passerelle 2a, 2b via l'ESB 3. Par requête, on entend un message construit (dans un protocole du serveur client 4) contenant toutes informations pour générer le paquet.

Ce procédé commence classiquement par la réception de la requête par l'ESB 3, via un connecteur adapté qui convertit la requête en un message interne à l'ESB 3. Comme l'on voit sur la figure 6b, une brique NodeJS 36 (un framework évènementiel) interposée entre l'ESB 3 et le serveur client 4 peut gérer la construction et l'envoi des requêtes.

Le serveur NodeJS 36 peut être considéré comme une brique d'exposition de la fonctionnalité, une API « Application Programming Interface ». Le serveur NodeJS 36 est préférentiellement disposé en dehors de l'ESB 3 (par exemple lui aussi dans le réseau internet 40) pour éviter qu'un trop grand nombre d'appels impacte le fonctionnement de base. On peut avoir autant de serveurs 36 d'API que l'on veut, en fonction de la technologie du ou des clients 4.

Dans la mesure où la requête provient d'un serveur connu d'un client de l'opérateur, il n'y a pas lieu d'interroger un annuaire 32 comme dans le sens descendant.

L'ESB 3 envoie alors à un connecteur de sortie 31 de l'ESB 3 le message interne contenant les données de ladite requête. Comme les autres connecteurs, le connecteur 31 agit comme une file d'attente. Comme dans l'autre sens, un fort pic de paquets augmentera localement le nombre de messages en file d'attente, mais n'altèrera en rien les performances du système global. De plus, on rappelle que pour des questions d'économie de batterie les équipements 1a, 1b restent éteints la grande majorité du temps, et ne sont allumés que pendant des intervalles temporels d'activation prédéterminés. Le connecteur de sortie 31 agit de façon très pratique comme file d'attente le temps que l'équipement 1a, 1b de destination soit activé (i.e. tant que l'on est hors d'un intervalle temporel d'activation de l'équipement 1a, 1b). On note que les messages dans le connecteur 31 peuvent être triés conformément à leur ordre d'activation de sorte à optimiser l'utilisation de l'ESB 3.

En référence à la **figure 4b****,** le connecteur de sortie 31 est avantageusement un serveur d'un protocole de messagerie instantanée tel que XMPP (Extensible Messaging and Presence Protocol), auquel chaque passerelle 2a, 2b est connectée au sein du réseau opérateur 20 via un client 310. On peut exploiter la présence XMPP (chaque passerelle 2a, 2b se déclare disponible, en attente, occupée). L'équipement 1a, 1b de destination est identifié par une adresse unique, comprenant sa MAC (comme l'on voit sur la figure 4b).

Il est possible d'utiliser des extensions de XMPP appelées XEP (« XMPP Extension Protocols »), en particulier un XEP d'authentification pour garantir la sécurité des échanges.

Il est à noter que le protocole MQTT peut ici aussi être utilisé, mais XMPP présente l'intérêt de permettre un lien bidirectionnel entre le client 310 et le connecteur de sortie 31, de sorte à permettre la réception par le connecteur de sortie 31 d'un message de confirmation de l'envoi d'un paquet, et la notification au client 4 (le connecteur de sortie 31 est alors un connecteur bidirectionnel lui aussi).

Ainsi, lorsque l'on entre dans un intervalle temporel d'activation de l'équipement 1a, 1b, le connecteur de sortie 31 émet à destination d'une ou plusieurs passerelles 2a, 2b les données de ladite requête (extraites du message ESB). On comprendra qu'il s'agit d'une étape de dépilement d'une file d'attente (au même titre que l'étape (f) du procédé selon le premier aspect).

Les passerelles 2a, 2b gèrent l'envoi final (en particulier le routage de passerelle en passerelle, et l'émission radio).

### Plateforme et système

Selon un troisième aspect, l'invention concerne en particulier la plateforme pour la mise en œuvre de l'ESB 3.

Comme expliqué précédemment, cette (ou ces) plateforme comprend des moyens de traitement configurés pour :
∘ En réception de données (mise en œuvre du procédé selon le premier aspect)
   - Recevoir à un connecteur d'entrée 30 de l'ESB 3, depuis une passerelle 2a, 2b, des données d'un paquet, et convertir lesdites données du paquet en un message interne à l'ESB 3 contenant les données du paquet ;
   - Déterminer un identifiant d'état et d'un identifiant client d'un équipement 1a, 1b d'origine du paquet par interrogation d'un annuaire 32 d'équipements 1a, 1b associés à l'ESB 3,
   - Modifier ledit message interne de sorte à intégrer lesdits identifiant d'état et identifiant client déterminés, et émettre le message modifié à destination d'une file d'attente de messages 33 ;
   - Dépiler ledit message de ladite pile de message 33, et modifier une base de données 35 en fonction des données et des identifiants contenus dans le message ;
∘ Et/ou en émission de données (mise en œuvre du procédé selon le deuxième aspect)
   - Recevoir une requête depuis un serveur client 4 ;
   - Envoyer à un connecteur de sortie 31 de l'ESB 3 un message interne à l'ESB 3 contenant les données de ladite requête ;
   - Générer au niveau du connecteur de sortie 31 des données de ladite requête à destination d'une passerelle 2a, 2b, en vue d'une diffusion d'un paquet contenant les données de la requête via communication radio par la passerelle 2a, 2b.

Cette plateforme est un élément du système de gestion d'équipements 1a, 1b qui constitue le quatrième aspect de l'invention.

Le système comprend, outre l'au moins une plateforme pour la mise en œuvre de l'ESB, au moins une passerelle 2a, 2b adaptée pour communiquer avec les équipements 1a, 1b via communication radio, et connectée à l'ESB 3 (mais pas directement au réseau internet 40).

### Produit programme d'ordinateur

Selon un cinquième et un sixième aspects, l'invention concerne un produit programme d'ordinateur comprenant des instructions de code pour l'exécution (sur des moyens de traitement en particulier de la plateforme de l'ESB 3, mais également de la passerelle 2a, 2b) d'un procédé de traitement d'un paquet émis depuis un équipement 1a, 1b comprenant des moyens de communication radio 10 selon le premier aspect de l'invention, ou un procédé de traitement d'une requête émise par un serveur client 4 à destination d'un équipement 1a, 1b comprenant des moyens de communication radio 10 adaptés pour communiquer avec au moins une passerelle 2a, 2b selon le deuxième aspect de l'invention, ainsi que des moyens de stockage lisibles par un équipement informatique (par exemple un disque dur de la plateforme de l'ESB 3) sur lequel on trouve ce produit programme d'ordinateur.

## Revendications

1. Procédé de traitement d'un paquet émis depuis un équipement (1a, 1b) comprenant des moyens de communication radio (10), le procédé étant tel qu'il comprend des étapes de :
(a) réception du paquet par au moins une passerelle (2a, 2b) via communication radio, chaque passerelle (2a, 2b) étant connectée au réseau internet (40) via un Bus d'Entreprise (3) mis en œuvre par au moins une plateforme ;
(b) vérification de l'intégrité du paquet et retransmission des données du paquet à un connecteur d'entrée (30) du Bus d'Entreprise (3) ;
(c) réception desdites données du paquet par le connecteur d'entrée (30) et conversion desdites données du paquet en un message interne au Bus d'Entreprise(3) contenant les données du paquet ; et première interrogation d'un annuaire d'équipements associés au Bus d'Entreprise (32) pour déterminer si un équipement (1a, 1b) d'origine du paquet est présent dans l'annuaire (32); et, si l'équipement est déterminé présent, mise en œuvre des étapes (c1), (d), (e) et (f) suivantes:
(c1) deuxième interrogation de l'annuaire (32) pour déterminer un identifiant d'état et un identifiant du propriétaire de l'équipement (1a, 1b) ;
(d) détermination de l' identifiant d'état et de l'identifiant du propriétaire de l'équipement (1a, 1b) d'origine du paquet,
(e) modification par le Bus d'Entreprise (3) dudit message interne de sorte à intégrer lesdits identifiant d'état et identifiant du propriétaire de l'équipement déterminés, et émission du message modifié à destination d'une file d'attente de messages (33) ;
(f) dépilement dudit message de ladite pile de message (33), et modification par le Bus d'Entreprise (3) d'une base de données (35) en fonction des données et des identifiants contenus dans le message.

2. Procédé selon la revendication 1, dans lequel l'étape (f) comprend, préalablement à la modification de la base de données (35), la transmission de l'identifiant du propriétaire de l'équipement contenu dans le message à un serveur de facturation (34).

3. Procédé selon l'une des revendications précédentes, dans lequel l'étape (c) comprend l'intégration au message interne d'un identifiant unique du message par le connecteur d'entrée (30).

4. Procédé selon la revendication 3, dans lequel l'identifiant unique du message interne comprend un identifiant de l'équipement (1a, 1b) d'origine du paquet et un compteur de trames.

5. Procédé selon l'une des revendications 3 et 4, comprenant préalablement à l'étape (d) une étape (c2) de mise en œuvre par le Bus d'Entreprise (3) d'un filtrage idempotent en fonction des identifiants uniques de sorte à supprimer tout message doublon.

6. Procédé selon l'une des revendications précédentes, dans lequel chaque passerelle (2a, 2b) est connectée au connecteur (30) via un client (300) mettant en œuvre un tunnel entre le client (300) et le connecteur (30).

7. Procédé selon la revendication 6, dans lequel les données du paquet sont transmises dans le tunnel via le protocole MQ Telemetry Transport, MQTT.

8. Procédé selon l'une des revendications précédentes, dans lequel l'état d'un équipement (1a, 1b) est choisi parmi « actif », « interdit », « provisionné » et « inconnu ».

9. Procédé selon la revendication 8, dans lequel l'étape (e) est mise en œuvre seulement si l'équipement (1a, 1b) est déterminé comme présentant un état actif.

10. Plateforme pour la mise en œuvre d'un Bus d'Entreprise, ESB, (3), comprenant des moyens de traitement configurés pour :
- recevoir à un connecteur d'entrée (30) du Bus d'Entreprise (3), depuis une passerelle (2a, 2b), des données d'un paquet, et convertir lesdites données du paquet en un message interne au Bus d'Entreprise (3) contenant les données du paquet ;
- effectuer une première interrogation d'un annuaire d'équipements associés au Bus d'Entreprise (32) pour déterminer si un équipement (1a, 1b) d'origine du paquet est présent dans l'annuaire (32); et, si l'équipement est déterminé présent:
* effectuer une deuxième interrogation de l'annuaire (32) pour déterminer un identifiant d'état et un identifiant du propriétaire de l'équipement (1a, 1b).
* déterminer l' identifiant d'état et l'identifiant du propriétaire de l' équipement (1a, 1b) d'origine du paquet,
* modifier ledit message interne de sorte à intégrer lesdits identifiant d'état et identifiant du propriétaire de l'équipement déterminés, et émettre le message modifié à destination d'une file d'attente de messages (33) ;
* dépiler ledit message de ladite pile de message (33), et modifier une base de données (35) en fonction des données et des identifiants contenus dans le message.

11. Plateforme selon la revendication 10, dans laquelle les moyens de traitement sont en outre configurés pour :
- Recevoir une requête depuis un serveur client (4) ;
- Envoyer à un connecteur de sortie (31) du Bus d'Entreprise (3) un message interne au Bus d'Entreprise (3) contenant les données de ladite requête ;
- Générer au niveau du connecteur de sortie (32) des données de ladite requête à destination d'une passerelle (2a, 2b), en vue d'une diffusion d'un paquet contenant les données de la requête via communication radio par la passerelle (2a, 2b) ;

12. Système de gestion d'équipements (1a, 1b), le système comprenant au moins une plateforme pour la mise en œuvre d'un Bus d'Entreprise (3) selon l'une des revendications 10 et 11, et au moins une passerelle (2a, 2b) adaptée pour communiquer avec les équipements (1a,1b) via communication radio, et connectée au Bus d'Entreprise (3).

13. Produit programme d'ordinateur comprenant des instructions de code qui, lorsque le programme est exécuté par un ordinateur, conduisent celui-ci à mettre en œuvre le procédé de traitement d'un paquet émis depuis un équipement (1a, 1b) comprenant des moyens de communication radio (10) selon l'une des revendications 1 à 9.

14. Moyen de stockage lisible par un équipement informatique sur lequel est enregistré un produit programme d'ordinateur selon la revendication 13.

## Patentansprüche

1. Verfahren zur Verarbeitung eines Pakets, das von einem Funkkommunikationsmittel (10) umfassenden Gerät (1a, 1b) ausgegeben wird, wobei das Verfahren derart ist, dass es Schritte umfasst des:
(a) Empfangens des Pakets über Funkkommunikation durch mindestens ein Gateway (2a, 2b), wobei jedes Gateway (2a, 2b) über einen Enterprise-Bus (3), der von mindestens einer Plattform implementiert wird, mit dem Internet (40) verbunden ist;
(b) Verifizierens der Integrität des Pakets und Weiterleitens der Daten des Pakets an einen Eingangsverbinder (30) des Enterprise-Busses (3);
(c) Empfangens der Daten des Pakets durch den Eingangsverbinder (30) und Umwandeins der Daten des Pakets in eine interne Nachricht des Enterprise-Busses (3), die die Daten des Pakets enthält; und ersten Abfragens eines Verzeichnisses von mit dem Enterprise-Bus verknüpften Geräten (32), um zu bestimmen, ob ein Ursprungsgerät (1a, 1b) des Pakets im Verzeichnis (32) vorhanden ist; und wenn bestimmt wird, dass das Gerät vorhanden ist, Implementierens der folgenden Schritte (c1), (d), (e) und (f):
(c1) zweites Abfragen des Verzeichnisses (32), um eine Zustandskennung und eine Kennung des Eigentümers des Geräts (1a, 1b) zu bestimmen;
(d) Bestimmen der Zustandskennung und der Kennung des Eigentümers des Ursprungsgeräts (1a, 1b) des Pakets;
(e) Modifizieren der internen Nachricht durch den Enterprise-Bus (3), um die Zustandskennung und Kennung des Eigentümers des Geräts, die bestimmt wurden, zu integrieren, und Ausgeben der modifizierten Nachricht an eine Nachrichtenwarteschlange (33);
(f) Entstapeln der Nachricht aus dem Nachrichtenstapel (33) und Modifizieren einer Datenbank (35) durch den Enterprise-Bus (3) in Abhängigkeit von den Daten und den Kennungen, die in der Nachricht enthalten sind.

2. Verfahren nach Anspruch 1, wobei der Schritt (f) vor dem Modifizieren der Datenbank (35) das Übertragen der Kennung des Eigentümers des Geräts, die in der Nachricht enthalten ist, an einen Abrechnungsserver (34) umfasst.

3. Verfahren nach einem der vorstehenden Ansprüche, wobei der Schritt (c) das Integrieren einer eindeutigen Kennung der Nachricht durch den Eingangsverbinder (30) in die interne Nachricht umfasst.

4. Verfahren nach Anspruch 3, wobei die eindeutige Kennung der internen Nachricht eine Kennung des Ursprungsgeräts (1a, 1b) des Pakets und einen Frame-Zähler umfasst.

5. Verfahren nach einem der Ansprüche 3 und 4, das vor dem Schritt (d) einen Schritt (c2) des Implementierens einer idempotenten Filterung durch den Enterprise-Bus (3) in Abhängigkeit von den eindeutigen Kennungen umfasst, um jede doppelte Nachricht zu beseitigen.

6. Verfahren nach einem der vorstehenden Ansprüche, wobei jedes Gateway (2a, 2b) über einen Client (300), der einen Tunnel zwischen dem Client (300) und dem Verbinder (30) implementiert, mit dem Verbinder (30) verbunden ist.

7. Verfahren nach Anspruch 6, wobei die Daten des Pakets im Tunnel über das MQ Telemetry Transport-, MQTT, Protokoll übertragen werden.

8. Verfahren nach einem der vorstehenden Ansprüche, wobei der Zustand eines Geräts (1a, 1b) aus "aktiv", "verboten", "bereitgestellt" und "unbekannt" ausgewählt wird.

9. Verfahren nach Anspruch 8, wobei der Schritt (e) nur dann implementiert wird, wenn bestimmt wird, dass das Gerät (1a, 1b) einen aktiven Zustand aufweist.

10. Plattform zum Implementieren eines Enterprise-Busses, ESB, (3), die Verarbeitungsmittel umfasst, welche dafür konfiguriert sind:
- an einem Eingangsverbinder (30) des Enterprise-Busses (3) Daten eines Pakets von einem Gateway (2a, 2b) zu empfangen und die Daten des Pakets in eine interne Nachricht des Enterprise-Busses (3) umzuwandeln, die die Daten des Pakets enthält;
*eine erste Abfrage eines Verzeichnisses von mit dem Enterprise-Bus verknüpften Geräten (32) vorzunehmen, um zu bestimmen, ob ein Ursprungsgerät (1a, 1b) des Pakets im Verzeichnis (32) vorhanden ist; und wenn bestimmt wird, dass das Gerät vorhanden ist:
*eine zweite Abfrage des Verzeichnisses (32) vorzunehmen, um eine Zustandskennung und eine Kennung des Eigentümers des Geräts (1a, 1b) zu bestimmen,
*die Zustandskennung und die Kennung des Eigentümers des Ursprungsgeräts (1a, 1b) des Pakets zu bestimmen,
*die interne Nachricht zu modifizieren, um die Zustandskennung und Kennung des Eigentümers des Geräts, die bestimmt wurden, zu integrieren, und die modifizierte Nachricht an eine Nachrichtenwarteschlange (33) auszugeben,
*die Nachricht aus dem Nachrichtenstapel (33) zu entstapeln und eine Datenbank (35) in Abhängigkeit von den Daten und den Kennungen, die in der Nachricht enthalten sind, zu modifizieren.

11. Plattform nach Anspruch 10, wobei die Verarbeitungsmittel weiter dafür konfiguriert sind:
- eine Anfrage von einem Client-Server (4) zu empfangen;
- eine interne Nachricht des Enterprise-Busses (3), die die Daten der Anfrage enthält, an einen Ausgangsverbinder (31) des Enterprise-Busses (3) zu senden;
- auf Ebene des Ausgangsverbinders (32) Daten der Anfrage für ein Gateway (2a, 2b) im Hinblick auf eine Verteilung eines die Daten der Anfrage enthaltenden Pakets über Funkkommunikation durch das Gateway (2a, 2b) zu erzeugen.

12. System zur Verwaltung von Geräten (1a, 1b), wobei das System mindestens eine Plattform zur Implementierung eines Enterprise-Busses (3) nach einem der Ansprüche 10 und 11, und mindestens ein Gateway (2a, 2b) umfasst, das dafür geeignet ist, über Funkkommunikation mit den Geräten (1a, 1b) zu kommunizieren, und das mit dem Enterprise-Bus (3) verbunden ist.

13. Computerprogrammprodukt, das Codeanweisungen umfasst, die, wenn das Programm von einem Computer ausgeführt wird, diesen dazu bringen, das Verfahren zur Verarbeitung eines von einem Funkkommunikationsmittel (10) umfassenden Gerät (1a, 1b) ausgegebenen Pakets nach einem der Ansprüche 1 bis 9 zu implementieren.

14. Speichermittel, das von einem IT-Gerät gelesen werden kann, auf dem ein Computerprogrammprodukt nach Anspruch 13 aufgezeichnet ist.

## Claims

1. A method for processing a packet emitted from a device (1a, 1b) comprising radio communication means (10), the method being such that it comprises steps of:
(a) reception of the packet by at least one gateway (2a, 2b) via radio communication, each gateway (2a, 2b) being connected to the internet network (40) via an Enterprise Bus (3) implemented by at least one platform;
(b) verification of the integrity of the packet and retransmission of the packet data to an input connector (30) of the Enterprise Bus (3);
(c) reception of said packet data by the input connector (30) and conversion of said packet data into an internal message to the Enterprise Bus (3) containing the packet data; and first query of a directory of devices associated with the Enterprise Bus (32) to determine whether an device (1a, 1b) of origin of the packet is present in the directory (32); and, if the device is determined to be present, implementation of the following steps (c1), (d), (e) and (f):
(c1) second query of the directory (32) to determine a state identifier and an identifier of the owner of the device (1a, 1b);
(d) determination of the state identifier and the identifier of the owner of the device (1a, 1b) of origin of the packet,
(e) modification of said internal message by the Enterprise Bus (3) so as to integrate said determined state identifier and identifier of the owner of the device, and emission of the modified message to a message queue (33);
(f) unstacking of said message from said message stack (33), and modification of a database (35) by the Enterprise Bus (3) according to the data and identifiers contained in the message.

2. The method according to claim 1, wherein step (f) comprises, prior to the modification of the database (35), the transmission of the identifier of the owner of the device contained in the message to a billing server (34).

3. The method according to one of the preceding claims, wherein step (c) comprises the integration into the internal message of a unique identifier of the message by the input connector (30).

4. The method according to claim 3, wherein the unique identifier of the internal message comprises an identifier of the device (1a, 1b) of origin of the packet and a frame counter.

5. The method according to one of claims 3 and 4, comprising prior to step (d) a step (c2) of implementing an idempotent filtering by the Enterprise Bus (3) according to unique identifiers so as to delete any duplicate message.

6. The method according to one of the preceding claims, wherein each gateway (2a, 2b) is connected to the connector (30) via a client (300) implementing a tunnel between the client (300) and the connector (30).

7. The method according to claim 6, wherein the packet data are transmitted in the tunnel via the MQ Telemetry Transport protocol, MQTT.

8. The method according to one of the preceding claims, wherein the state of a device (1a, 1b) is selected from "active", "forbidden", "provisioned" and "unknown".

9. The method according to claim 8, wherein step (e) is implemented only if the device (1a, 1b) is determined to have an active state.

10. A platform for implementing an Enterprise Bus, ESB, (3), comprising processing means configured for:
- receiving at an input connector (30) of the Enterprise Bus (3), from a gateway (2a, 2b), packet data, and converting said packet data into an internal message to the Enterprise Bus (3) containing the packet data; performing a first query of a directory of devices associated with the Enterprise Bus (32) to determine whether an device (1a, 1b) of origin of the packet is present in the directory (32); and, if the device is determined to be present:
* performing a second query of the directory (32) to determine a state identifier and an identifier of the owner of the device (1a, 1b).
* determining the state identifier and the identifier of the owner of the device (1a, 1b) of origin of the packet,
* modifying said internal message so as to integrate said determined state identifier and identifier of the owner of the device, and emitting the modified message to a message queue (33);
* unstacking said message from said message stack (33), and modifying a database (35) according to the data and identifiers contained in the message.

11. The platform according to claim 10, wherein the processing means are further configured for:
- Receiving a request from a client server (4);
- Sending to an output connector (31) of the Enterprise Bus (3) an internal message to the Enterprise Bus (3) containing the data of said request;
- Generating at the output connector (32) data of said request to a gateway (2a, 2b), for broadcasting a packet containing the data of the request via radio communication by the gateway (2a, 2b);

12. A device management system (1a, 1b), the system comprising at least one platform for implementing an Enterprise Bus (3) according to one of claims 10 and 11, and at least one gateway (2a, 2b) adapted to communicate with the devices (1a, 1b) via radio communication, and connected to the Enterprise Bus (3).

13. A computer program product comprising code instructions which, when the program is executed by a computer, cause the latter to implement the method for processing a packet emitted from a device (1a, 1b) comprising radio communication means (10) according to one of claims 1 to 9.

14. A storage means readable by a computing device on which a computer program product according to claim 13 is recorded.
